# EUROPÄISCHE PATENTANMELDUNG

(11) **EP 3 888 867 A1**
(43) Veröffentlichungstag der Anmeldung: **06.10.2021**
(21) Anmeldenummer: 21165915.6
(22) Anmeldetag: 30.03.2021
(51) Int. Cl.: B29C 33/34, B29C 31/00, B29C 33/20, B29C 35/02, B29C 45/04, B29C 45/17, B29C 45/64, B29C 45/73, B25J 15/00, B25J 15/02

(54) **SPRITZGUSSSYSTEM, FERTIGUNGSSYSTEM UND VERFAHREN ZUR HERSTELLUNG VON FORMTEILEN AUS SPRITZFÄHIGEN ODER SCHÄUMFÄHIGEN FORMMASSEN**

(30) Priorität: 02.04.2020 DE 102020109203
(71) Anmelder: STG Stanztechnik GmbH & Co.KG, 84032 Altdorf (DE)
(72) Erfinder: STEINL, Peter, 84036 Landshut (DE)
(74) Vertreter: Flügel Preissner Schober Seidel

(57) **Zusammenfassung**

Die Erfindung betrifft ein Spritzgusssystem (10) zur Herstellung von Formteilen aus spritzfähigen Formmassen, aufweisend wenigstens eine Spritzgussvorrichtung (12), die ausgebildet ist, eine spritzfähige Formmasse in ein Formgebungswerkzeug (22) einzuspritzen, wenigstens eine Heizvorrichtung (16), die ausgebildet ist, die in das Formgebungswerkzeug (22) eingespritzte Formmasse zu erwärmen, und wenigstens eine Werkzeuggreifvorrichtung (14), die ausgebildet ist, wenigstens ein Formgebungswerkzeug (22) zu greifen und/oder zu verriegeln und dieses der Spritzgussvorrichtung (12) und/oder der Heizvorrichtung (16) zu zuführen und/oder zu entnehmen. Ferner betrifft die Erfindung Fertigungssysteme (100) zur Herstellung von Formteilen aus spritzfähigen oder schäumbaren Formmassen sowie Verfahren zur Herstellung von Formteilen aus spritzfähigen oder schäumbaren Formmassen.

## Beschreibung

Die Erfindung betrifft ein Spritzgusssystem zur Herstellung von Formteilen aus spritzfähigen Formmassen. Ferner betrifft die Erfindung Fertigungssysteme zur Herstellung von Formteilen aus Formmassen, insbesondere aus spritzfähigen oder aus schäumfähigen Formmassen sowie Verfahren zur Herstellung von Formteilen aus spritzfähigen oder schäumfähigen Formmassen mittels des Spritzgusssystems oder der Fertigungssysteme.

Bei der Herstellung von Formteilen wird eine Formmasse, beispielsweise ein Kunststoff, insbesondere ein Elastomer, in einer Spritzgussmaschine in den plastifzierten Zustand überführt und in einen Formhohlraum eines Formgebungswerkzeuges eingespritzt.

Nach dem Einspritzen ist es erforderlich, die Formmasse aufzuheizen, damit diese durch Vernetzung in einen festen Zustand übergeht. Dieser Vorgang wird als Vulkanisationsprozess bezeichnet. Im Anschluss an die Vernetzung kann das Formgebungswerkzeug geöffnet und das erhärtete Formteil entnommen werden.

Um die Taktzeiten einer Spritzgießmaschine zu erhöhen, ist es bekannt, das Formgebungswerkzeug nach dem Einspritzen der Formmasse aus der Spritzgussmaschine zu entfernen und selbiges einer Heizstation zum Erwärmen zuzuführen.

So ist aus DE 10 2008 015 534 A1 eine Vorrichtung und ein Verfahren zum Herstellen von Kunststoff-Formteilen bekannt, bei denen in einer Spritzgussmaschine aufgeschmolzenes Kunststoffgranulat in eine Kavität eines formgebenden Werkzeugs eingespritzt wird. Im Anschluss daran wird das Werkzeug druckdicht verschlossen, durch eine Werkzeug-Schnellwechselvorrichtung aus der Verarbeitungsmaschine entnommen und über eine als Transportband ausgebildete Transportvorrichtung aus dem Verarbeitungsraum der Maschine abtransportiert und einer weiteren Verarbeitungsstation zugeführt. Während des Transports wird das Werkzeug über angeschlossene Versorgungsleitungen beheizt.

Der vorliegenden Erfindung liegt die Aufgabe zugrunde, ein Spritzgusssystem, Fertigungssysteme sowie Verfahren zur Herstellung von Formteilen aus Formmassen zu schaffen, die eine effizientere und kostengünstigere Herstellung von Formteilen ermöglichen.

Zur Lösung der Aufgabe wird ein Spritzgusssystem mit den Merkmalen des Anspruchs 1, Fertigungssysteme mit den Merkmalen der Ansprüche 2 und 3 sowie ein Verfahren mit den Merkmalen des Anspruchs 24 oder 25 vorgeschlagen.

Vorteilhafte Ausgestaltungen des Spritzgusssystems, der Fertigungssysteme und des Verfahrens sind Gegenstand der jeweils abhängigen Ansprüche.

Gemäß einem Aspekt wird ein Spritzgusssystem zur Herstellung von Formteilen aus spritzfähigen Formmassen, insbesondere zur vollautomatischen Herstellung von Formteilen aus spritzfähigen Formmassen vorgeschlagen. Das Spritzgusssystem umfasst wenigstens eine Spritzgussvorrichtung, die ausgebildet ist, eine spritzfähige Masse in ein Formgebungswerkzeug einzuspritzen, wenigstens eine Heizvorrichtung, die ausgebildet ist, die in das Formgebungswerkzeug eingespritzte Masse zu erwärmen, und wenigstens eine Werkzeuggreifvorrichtung, die ausgebildet ist, wenigstens ein Formgebungswerkzeug zu greifen und/oder zu verriegeln und diese der Spritzgussvorrichtung und/oder der Heizvorrichtung zuzuführen und/oder zu entnehmen.

Bei dem Spritzgusssystem ist die Heizvorrichtung außerhalb der Spritzgussvorrichtung angeordnet, so dass das Erwärmen der Formmasse außerhalb der Spritzgussmaschine erfolgt. Dadurch steht die Spritzgussvorrichtung unmittelbar nach dem Einspritzen für einen neuen Arbeitszyklus zur Verfügung. Infolgedessen sind die Taktzeiten der Spritzgussvorrichtung unabhängig von der Heizzeit der Formteile, so dass eine effizientere und damit wirtschaftliche und kostengünstigere Herstellung gewährleistet werden kann. Zudem gewährleistet die Werkzeuggreifvorrichtung einen flexiblen und effizienten Transport eines Formgebungswerkzeuges von der Spritzgussvorrichtung zu der Heizvorrichtung. Darüber hinaus kann die Werkzeuggreifvorrichtung das Formgebungswerkzeug verriegeln, um ein Aufdrücken des Formgebungswerkzeugs aufgrund des darin vorherrschenden Drucks nach dem Einspritzen der Formmasse während des Transports zu verhindern.

Bei dem Spritzgusssystem plastifiziert die Spritzgussvorrichtung eine Formmasse und spritzt die plastifizierte Formmasse in einen Formhohlraum eines Formgebungswerkzeuges. Nach dem Einspritzen der plastifizierten Formmasse in den Formhohlraum verriegelt die Werkzeuggreifvorrichtung das Formgebungswerkzeug, um ein Aufdrücken des Formgebungswerkzeuges während des Transports zu der Heizvorrichtung zu verhindern. Im Anschluss daran wird die Spritzgussvorrichtung geöffnet und die Werkzeuggreifvorrichtung entnimmt das Formgebungswerkzeug der Spritzgussmaschine und führt es der Heizvorrichtung zu. Bei der Übergabe des Formgebungswerkzeugs an die Heizvorrichtung durch die Werkzeuggreifvorrichtung übernimmt die Heizvorrichtung die Verriegelung des Formgebungswerkzeugs. Nach dem Schließen der Heizvorrichtung wird die im Formgebungswerkzeug befindliche Formmasse aufgeheizt. Nach Beendigung des Heizvorgangs entnimmt die Werkzeuggreifvorrichtung das Formgebungswerkzeug. Im Anschluss daran kann das Formgebungswerkzeug geöffnet und das erhärtete Formteil entnommen werden. Nach der Entnahme des erhärteten Formteils wird das Formgebungswerkzeug wieder geschlossen, und die Werkzeuggreifvorrichtung greift das leere Formgebungswerkzeug und bestückt damit die Spritzgussmaschine erneut, so dass ein neuer Arbeitszyklus beginnt.

Die Formmasse kann Kunststoff sein, das als Granulat vorliegen kann. Der Kunststoff kann ein Thermoplast, Duroplast oder Elastomer sein.

Die Spritzgussvorrichtung kann eine Plastifiziereinheit, eine Spritzeinheit, eine Bedieneinheit und eine Schließeinheit zum Schließen und Zuhalten des Formgebungswerkzeuges aufweisen. Die Plastifiziereinheit kann eine innerhalb eines Zylinders angeordnete Schnecke oder Extruder, eine Schneckenantriebsvorrichtung, einen Trichter zum Einfüllen der zu verarbeitenden Formmasse, eine Heizeinrichtung zum Plastifizieren der eingefüllten Formmasse und eine Düse zum Befüllen der Spritzeinheit mit der plastifizierten Formmasse aufweisen. Die Spritzeinheit kann einen Zylinder mit einer Düse und einen innerhalb des Zylinders beweglichen Kolben aufweisen. Durch Bewegung des Kolbens wird die im Zylinder befindliche plastifizierte Formmasse über die Düse in den Formhohlraum eines Formgebungswerkzeugs eingespritzt. In einer vorteilhaften Ausgestaltung beheizt die Spritzgussvorrichtung das Formgebungswerkzeug während des Einspritzens.

Die Heizvorrichtung kann ein Heizofen zum Beheizen des Formgebungswerkzeugs und der darin eingespritzten Formmasse sein. Die Heizvorrichtung kann ausgebildet sein, das Formgebungswerkzeug während des Heizens zu verriegeln.

Die Werkzeuggreifvorrichtung kann zum Greifen, Verriegeln und/oder Transport eines Formgebungswerkzeuges manuell oder autonom navigierend gesteuert sein.

Gemäß einem weiteren Aspekt wird ein Fertigungssystem zur Herstellung von Formteilen aus Formmassen, insbesondere schäumfähigen Formmassen, vorgeschlagen. Das Fertigungssystem weist wenigstens eine Verarbeitungsvorrichtung, die ausgebildet ist, ein Formgebungswerkzeug mit einer Formmasse zu befüllen, wenigstens eine Prozessreaktionsvorrichtung, die ausgebildet ist, die in das Formgebungswerkzeug eingefüllte Formmasse zu erwärmen oder zu kühlen, und wenigstens eine Werkzeugtransportvorrichtung, die ausgebildet ist, wenigstens zwei Formgebungswerkzeuge zu greifen und/oder zu verriegeln, auf.

Ferner wird gemäß einem weiteren Aspekt ein Fertigungssystem zur Herstellung von Formteilen aus Formmassen, insbesondere schäumfähigen Formmassen, vorgeschlagen. Das Fertigungssystem weist wenigstens eine Verarbeitungsvorrichtung, die ausgebildet ist, ein Formgebungswerkzeug mit einer Formmasse zu befüllen, wenigstens eine Prozessreaktionsvorrichtung, die ausgebildet ist, die in das Formgebungswerkzeug eingefüllte Formmasse zu erwärmen oder zu kühlen, und wenigstens eine Werkzeugtransportvorrichtung, die ausgebildet ist, wenigstens ein Formgebungswerkzeug zu greifen und zu verriegeln, auf.

Die Fertigungssysteme zeichnen sich durch die Möglichkeit der parallelen Arbeitsweise der einzelnen Vorrichtungen und dadurch einer gezielten Auslastung der Vorrichtungen aus. Da bei den Fertigungssystemen die Prozessreaktionsvorrichtungen außerhalb der Verarbeitungsvorrichtung angeordnet sind, erfolgt die Prozessreaktion der Formmasse außerhalb der Verarbeitungsvorrichtung. Dadurch steht die Verarbeitungsvorrichtung unmittelbar nach dem Befüllen für einen neuen Arbeitszyklus zur Verfügung. Dadurch sind die Taktzeiten der Verarbeitungsvorrichtung unabhängig von der Prozessreaktionszeit der Formteile, so dass eine effiziente und damit wirtschaftliche und kostengünstigere Herstellung gewährleistet werden kann. Zudem ermöglichen die Fertigungssysteme eine parallele Arbeitsweise und dadurch eine gezielte Auslastung der Vorrichtungen. Ferner ermöglichen die Fertigungssysteme eine flexible Fertigung und bedingt dadurch eine hohe Variantenvielfalt an Formteilen.

Wenn die Werkzeugtransportvorrichtung ausgebildet ist, wenigstens zwei Formgebungswerkzeuge zu greifen, kann die Werkzeugtransportvorrichtung ein Formgebungswerkzeug der Verarbeitungsvorrichtung oder der Prozessreaktionsvorrichtung entnehmen und im Anschluss an die Entnahme ein von der Werkzeugtransportvorrichtung gegriffenes beziehungsweise gehaltenes Formgebungswerkzeug der Verarbeitungsvorrichtung oder der Prozessreaktionsvorrichtung zuführen.

Vorteilhaft führt die Werkzeugtransportvorrichtung ein gegriffenes und/oder verriegeltes Formgebungswerkzeug der Verarbeitungsvorrichtung und/oder der Prozessreaktionsvorrichtung zu und/oder die Werkzeugtransportvorrichtung verriegelt und/oder entnimmt ein Formgebungswerkzeug der Verarbeitungsvorrichtung und/oder der Prozessreaktionsvorrichtung.

In einer vorteilhaften Ausgestaltung ist die Werkzeugtransportvorrichtung derart ausgebildet, dass die Werkzeugtransportvorrichtung ein Formgebungswerkzeug mittels Formschluss greifen und/oder mittels Formschluss verriegeln kann. Vorteilhaft kann die Werkzeugtransportvorrichtung Mittel aufweisen, die zum Greifen und/oder Verriegeln formschlüssig an dem Formgebungswerkzeug anliegen.

Vorteilhaft erfolgt die formschlüssige Verriegelung eines Formgebungswerkzeuges, indem das Formgebungswerkzeug zunächst in der Verarbeitungsvorrichtung oder in der Prozessreaktionsvorrichtung zusammengedrückt und in zusammengedrücktem Zustand von der Werkzeugtransportvorrichtung gegriffen wird. Die Werkzeugtransportvorrichtung verhindert infolge eines Formschlusses, dass das Formgebungswerkzeug aufgrund des vorherrschenden Innendrucks aufgedrückt wird. Zur Erzeugung einer Greifkraft, die ein Aufdrücken des Formgebungswerkzeuges verhindert, kann die Werkzeugtransportvorrichtung Mittel aufweisen, die formschlüssig an dem Formgebungswerkzeug anliegen. So kann die Werkzeugtransportvorrichtung Klemmschienen aufweisen, die formschlüssig an Klemmleisten des Formgebungswerkzeuges anliegen. Vorteilhaft wirken die Klemmschienen und die Klemmleisten unter Selbsthemmung zusammen. In einer vorteilhaften Ausgestaltung weist die Werkzeugtransportvorrichtung vier Klemmschienen auf, wobei jeweils zwei Klemmschienen mit jeweils zwei Klemmleisten des Formgebungswerkzeuges unter Selbsthemmung zusammenwirken. Alternativ kann das Formgebungswerkzeug eine Verriegelungsvorrichtung aufweisen, die das Aufdrücken des Formgebungswerkzeuges verhindert.

Ein Fertigungssystem zur Herstellung von Formteilen aus spritzfähigen Formmassen kann auch als Spritzgusssystem bezeichnet werden. Ein Fertigungssystem zur Herstellung von Formteilen aus schäumfähigen Formmassen kann auch als Schäumsystem bezeichnet werden.

Das Formgebungswerkzeug kann ein Oberteil und ein Unterteil aufweisen, wobei das Oberteil und das Unterteil Klemmleisten aufweisen, mittels denen das Formgebungswerkzeug durch die Werkzeugreifvorrichtung gegriffen und/oder verriegelt werden kann.

Das Spritzgusssystem oder die Fertigungssysteme können für Ein- oder Mehrkomponentenbauteilen eingesetzt werden. Einkomponentenbauteile können aus einem Elastomer, einem Duroplast, einem PUR-Systemen oder einem Kunststoff sein. Mehrkomponentenbauteile können Elastomer-Kunststoff-Teile, Elastomer-Duroplast-Teile, Elastomer-Kunststoff-Metall-Teile, Elastomer-Metall-Teile, Duroplast-Kunststoff-Teile, Duroplast-Kunststoff-Metall-Teile, Duroplast-Metall-Teile, PUR-System-Kunststoff-Teile, PUR-System-Duroplast-Teile, PUR-System-Kunststoff-Metall-Teile oder PUR-System-Metall-Teile sein.

In einer vorteilhaften Ausgestaltung ist die Werkzeuggreifvorrichtung ausgebildet wenigstens zwei Formgebungswerkzeuge zu greifen und/oder zu verriegeln. So kann die Werkzeuggreifvorrichtung ein in der Spritzgussvorrichtung befindliches Formgebungswerkzeug verriegeln und entnehmen und anschließend die Spritzgussvorrichtung unmittelbar mit einem neuen Formgebungswerkzeug bestücken.

In einer vorteilhaften Ausgestaltung weist die Werkzeuggreifvorrichtung einen Doppelgreifer zum Greifen von Formgebungswerkzeugen und einen Handlingroboter zum Bewegen des Doppelgreifers auf, wobei der Doppelgreifer mit dem Handlingroboter gekoppelt ist.

Dadurch wird der technische Vorteil erreicht, dass der Doppelgreifer gleichzeitig zwei Formgebungswerkzeuge greifen kann und diese mittels des Handlingroboters bewegt und/oder transportiert werden können. So kann der Doppelgreifer ein in der Spritzgussvorrichtung befindliches Formgebungswerkzeug verriegeln und entnehmen und anschließend die Spritzgussvorrichtung mit einem neuen Formgebungswerkzeug bestücken, welches bereits von dem Doppelgreifer gehalten wird. Hierzu kann der Doppelgreifer mittels des Handlingroboters um 180° gedreht werden. Vorteilhaft ist der Doppelgreifer ausgebildet, das Formgebungswerkzeug zu greifen und/oder zu verriegeln. In einer vorteilhaften Ausgestaltung weist der Doppelgreifer eine Kupplungseinrichtung auf, mittels derer der Doppelgreifer mit dem Handlingroboter verbunden werden kann. Der Handlingroboter kann als Roboterarm ausgebildet sein. Der Handlingroboter kann manuell gesteuert werden oder autonom navigierend ausgebildet sein.

In einer vorteilhaften Ausgestaltung weist die Werkzeugtransportvorrichtung einen Doppelgreifer auf, der ausgebildet ist, zwei Formgebungswerkzeuge zu greifen und/oder zu verriegeln.

Dadurch wird der technische Vorteil erreicht, dass der Doppelgreifer gleichzeitig zwei Formgebungswerkzeuge greifen kann. Ferner kann der Doppelgreifer zwei Formgebungswerkzeuge gleichzeitig greifen und diese gleichzeitig verriegeln. Vorteilhaft erfolgt das Greifen und das Verriegeln mittels Formschluss. Hierzu kann der Doppelgreifer Mittel aufweisen, die formschlüssig an dem Formgebungswerkzeug anliegen.

In einer vorteilhaften Ausgestaltung weist der Doppelgreifer eine erste Greifeinrichtung und eine zweite Greifeinrichtung auf, wobei die erste Greifeinrichtung ausgebildet ist, ein Formgebungswerkzeug zu greifen und/oder zu verriegeln, und wobei die zweite Greifeinrichtung ausgebildet ist, ein Formgebungswerkzeug zu greifen und/oder zu verriegeln.

Dadurch wird der technische Vorteil erreicht, dass der Doppelgreifer gleichzeitig zwei Formgebungswerkzeuge greifen und/oder verriegeln kann. Dadurch kann die Taktzeit der Spritzgussvorrichtung verkürzt werden, da ein Formgebungswerkzeug der Spritzgussvorrichtung verriegelt entnommen und durch Rotation des Doppelgreifers mit einem leeren Formgebungswerkzeug wieder bestückt werden kann.

In einer vorteilhaften Ausgestaltung weist die erste Greifeinrichtung zwei erste Greifbacken auf, wobei jede erste Greifbacke eine Klemmschiene oder zwei zueinander beabstandete Klemmschienen aufweist.

Dadurch wird der technische Vorteil erreicht, dass die erste Greifeinrichtung zwischen den ersten Greifbacken ein Formgebungswerkzeug aufnehmen beziehungsweise greifen und transportieren kann, wobei über die Klemmschienen das Formgebungswerkzeug verriegelt werden kann. Hierzu wirken die Klemmschienen mit Klemmleisten des Formgebungswerkzeugs zusammen. Wenn die ersten Greifbacken nur eine Klemmschiene aufweisen, dann kann lediglich ein Formgebungswerkzeug gegriffen und transportiert werden. Wenn die ersten Greifbacken zwei zueinander beabstandete Klemmschienen aufweisen, dann kann ein Formgebungswerkzeug sowohl gegriffen und transportiert als auch verriegelt werden. Die Klemmschienen können derart zueinander beabstandet sein, dass zwei Klemmschienen zwei Klemmleisten zwischen sich aufnehmen. So kann eine erste Klemmschiene auf einer ersten Klemmleiste aufliegen und eine zweite Klemmleiste kann auf einer zweiten Klemmschiene aufliegen. Dadurch wird ein Aufdrücken des Formgebungswerkzeugs verhindert. In einer vorteilhaften Ausgestaltung weist eine der Klemmschienen einer jeden ersten Greifbacke und/oder die dazu korrespondierende Klemmleiste eine Schräge auf. Weiterhin vorteilhaft weisen beide Klemmschienen und/oder die dazu korrespondierenden Klemmleisten eine Schräge auf. Über die Schrägen und die sich daraus ergebende Keilwirkung kann eine Selbsthemmung erzeugt werden, so dass die horizontal eingeleitete Schließbewegung in eine vertikale Klemmbewegung mit wesentlich höherer Schließkraft übersetzt werden kann. Dadurch wird ein Aufdrücken des Formgebungswerkzeuges aufgrund des darin vorherrschenden Drucks nach dem Einspritzen der Formmasse effektiv verhindert. Vorteilhaft weisen die Klemmschienen und/oder die Klemmleisten im Querschnitt eine Keilform auf. Die Schrägen von Klemmleiste und /oder Klemmschiene weisen einen Winkel von kleiner 7° auf.

In einer vorteilhaften Ausgestaltung weist der Doppelgreifer eine erste Antriebseinheit auf, mittels der die ersten Greifbacken aufeinander zu bewegbar oder voneinander weg bewegbar sind, um das Formgebungswerkzeug zwischen den beiden ersten Greifbacken zu greifen und zu verriegeln. Somit ermöglicht die erste Antriebseinheit die erste Greifeinrichtung von einer Offenstellung, in welcher die Klemmschienen von den Klemmleisten beabstandet sind, in eine Schließstellung, in welcher die Klemmschienen an den Klemmleisten anliegen, zu überführen und umgekehrt. Die erste Antriebseinheit kann elektrisch, hydraulisch oder pneumatisch betrieben sein.

In einer vorteilhaften Ausgestaltung weist die zweite Greifeinrichtung zwei zweite Greifbacken auf, wobei jede zweite Greifbacke eine Klemmschiene oder zwei zueinander beabstandete Klemmschienen aufweist.

Dadurch wird der technische Vorteil erreicht, dass mittels der zweiten Greifeinrichtung ein weiteres Formgebungswerkzeug aufgenommen beziehungsweise gegriffen und transportiert werden kann. Die zweite Greifeinrichtung wird bevorzugt dazu verwendet, um ein Formgebungswerkzeug der Spritzgussvorrichtung zuzuführen und ein Formgebungswerkzeug der Heizvorrichtung zu entnehmen. Zum Greifen und Transportieren des Formgebungswerkzeuges wirken die Klemmschienen mit Klemmleisten des Formgebungswerkzeugs zusammen. Hierzu können die Klemmschienen derart an den zweiten Greifbacken angeordnet sein, dass Klemmleisten des Formgebungswerkzeugs auf den Klemmschienen aufliegen. Wenn die zweiten Greifbacken zwei zueinander beabstandete Klemmschienen aufweisen, dann kann ein Formgebungswerkzeug sowohl gegriffen und transportiert als auch verriegelt werden. Die Klemmschienen können derart zueinander beabstandet sein, dass zwei Klemmschienen zwei Klemmleisten zwischen sich aufnehmen. So kann eine erste Klemmschiene auf einer ersten Klemmleiste aufliegen und eine zweite Klemmleiste kann auf einer zweiten Klemmschiene aufliegen. Dadurch wird ein Aufdrücken des Formgebungswerkzeugs verhindert. In einer vorteilhaften Ausgestaltung weist eine der Klemmschienen einer jeden zweiten Greifbacke und/oder die dazu korrespondierende Klemmleiste eine Schräge auf. Weiterhin vorteilhaft weisen beide Klemmschienen und/oder die dazu korrespondierenden Klemmleisten eine Schräge auf. Über die Schrägen und die sich daraus ergebende Keilwirkung kann eine Selbsthemmung erzeugt werden, so dass die horizontal eingeleitete Schließbewegung in eine vertikale Klemmbewegung mit wesentlich höherer Schließkraft übersetzt werden kann. Dadurch wird ein Aufdrücken des Formgebungswerkzeuges aufgrund des darin vorherrschenden Drucks nach dem Einspritzen der Formmasse effektiv verhindert. Vorteilhaft weisen die Klemmschienen und/oder die Klemmleisten im Querschnitt eine Keilform auf. Die Schrägen von Klemmleiste und /oder Klemmschiene weisen einen Winkel von kleiner 7° auf.

In einer vorteilhaften Ausgestaltung weist die Werkzeugtransportvorrichtung einen Greifer auf, der ausgebildet ist, ein Formgebungswerkzeug zu greifen und/oder zu verriegeln.

Dadurch wird der technische Vorteil erreicht, dass die Werkzeugtransportvorrichtung über den Greifer ein Formgebungswerkzeug greifen und/oder verriegeln kann. Vorteilhaft weist der Greifer Mittel auf, die formschlüssig an dem Formgebungswerkzeug anliegen, um das Formgebungswerkzeug zu greifen und/oder zu verriegeln.

In einer vorteilhaften Ausgestaltung weist der Greifer zwei Greifbacken auf, wobei jede Greifbacke eine Klemmschiene oder zwei zueinander beabstandete Klemmschienen aufweist.

Dadurch wird der technische Vorteil erreicht, dass mittels des Greifers ein Formgebungswerkzeug aufgenommen beziehungsweise gegriffen und/oder verriegelt transportiert werden kann. Hierzu wirken die Klemmschienen mit Klemmleisten des Formgebungswerkzeugs zusammen. Wenn jede der Greifbacken nur eine Klemmschiene aufweist, dann kann lediglich ein Formgebungswerkzeug gegriffen und transportiert werden. Wenn jede der Greifbacken zwei zueinander beabstandete Klemmschienen aufweist, dann kann ein Formgebungswerkzeug sowohl gegriffen und transportiert als auch verriegelt werden. Die Klemmschienen können derart zueinander beabstandet sein, dass zwei Klemmschienen zwei Klemmleisten zwischen sich aufnehmen. So kann eine erste Klemmschiene auf einer ersten Klemmleiste aufliegen und eine zweite Klemmleiste kann auf einer zweiten Klemmschiene aufliegen. Dadurch wird ein Aufdrücken des Formgebungswerkzeugs verhindert. In einer vorteilhaften Ausgestaltung weist eine der Klemmschienen einer jeden Greifbacke und/oder die dazu korrespondierende Klemmleiste eine Schräge auf. Weiterhin vorteilhaft weisen beide Klemmschienen und/oder die dazu korrespondierenden Klemmleisten eine Schräge auf. Über die Schrägen und die sich daraus ergebende Keilwirkung kann eine Selbsthemmung erzeugt werden, so dass die horizontal eingeleitete Schließbewegung in eine vertikale Klemmbewegung mit wesentlich höherer Schließkraft übersetzt werden kann. Dadurch wird ein Aufdrücken des Formgebungswerkzeuges aufgrund des darin vorherrschenden Drucks nach dem Einspritzen der Formmasse effektiv verhindert. Vorteilhaft weisen die Klemmschienen und/oder die Klemmleisten im Querschnitt eine Keilform auf. Die Schrägen von Klemmleiste und /oder Klemmschiene weisen einen Winkel von kleiner 7° auf.

In einer vorteilhaften Ausgestaltung weist die Werkzeugtransportvorrichtung einen Mehrfachgreifer auf, der ausgebildet ist, wenigstens drei Formgebungswerkzeuge zu greifen und/oder zu verriegeln.

Dadurch wird der technische Vorteil erreicht, dass die Werkzeugtransportvorrichtung mehrere Formgebungswerkzeuge gleichzeitig greifen und/oder verriegeln kann. Ein Mehrfachgreifer kann mehrere Greifeinrichtungen aufweisen. Vorteilhaft weist jede Greifeinrichtung zwei Greifbacken auf, wobei jede Greifbacke eine Klemmschiene oder zwei zueinander beabstandete Klemmschienen aufweist. Wenn jede der Greifbacken nur eine Klemmschiene aufweist, dann kann lediglich ein Formgebungswerkzeug gegriffen und transportiert werden. Wenn jede der Greifbacken zwei zueinander beabstandete Klemmschienen aufweist, dann kann ein Formgebungswerkzeug sowohl gegriffen und transportiert als auch verriegelt werden. Die Klemmschienen können derart zueinander beabstandet sein, dass zwei Klemmschienen zwei Klemmleisten zwischen sich aufnehmen. So kann eine erste Klemmschiene auf einer ersten Klemmleiste aufliegen und eine zweite Klemmleiste kann auf einer zweiten Klemmschiene aufliegen. Dadurch wird ein Aufdrücken des Formgebungswerkzeugs verhindert. In einer vorteilhaften Ausgestaltung weist eine der Klemmschienen einer jeden Greifbacke und/oder die dazu korrespondierende Klemmleiste eine Schräge auf. Weiterhin vorteilhaft weisen beide Klemmschienen und/oder die dazu korrespondierenden Klemmleisten eine Schräge auf. Über die Schrägen und die sich daraus ergebende Keilwirkung kann eine Selbsthemmung erzeugt werden, so dass die horizontal eingeleitete Schließbewegung in eine vertikale Klemmbewegung mit wesentlich höherer Schließkraft übersetzt werden kann. Dadurch wird ein Aufdrücken des Formgebungswerkzeuges aufgrund des darin vorherrschenden Drucks nach dem Einspritzen der Formmasse effektiv verhindert. Vorteilhaft weisen die Klemmschienen und/oder die Klemmleisten im Querschnitt eine Keilform auf. Die Schrägen von Klemmleiste und /oder Klemmschiene weisen einen Winkel von kleiner 7° auf.

In einer vorteilhaften Ausgestaltung weist die Werkzeugtransportvorrichtung eine Manipulationsvorrichtung auf, die mit dem Doppelgreifer, dem Mehrfachgreifer oder dem Greifer gekoppelt ist, um den Doppelgreifer, den Mehrfachgreifer oder den Greifer zu bewegen.

Dadurch wird der technische Vorteil erreicht, dass ein, zwei oder mehrere Formgebungswerkzeuge von der Verarbeitungsvorrichtung zu der Prozessreaktionsvorrichtung transportiert werden können. In einer vorteilhaften Ausgestaltung weist der Doppelgreifer, der Mehrfachgreifer oder der Greifer eine Kupplungseinrichtung auf, mittels derer der Doppelgreifer, der Mehrfachgreifer oder der Greifer mit der Manipulationsvorrichtung verbunden werden kann.

In einer vorteilhaften Ausgestaltung ist die Manipulationsvorrichtung ein Handlingroboter oder eine Linearvorrichtung.

Dadurch wird der technische Vorteil erreicht, dass der Doppelgreifer, der Mehrfachgreifer oder der Greifer samt gegriffenem und/oder verriegeltem Formgebungswerkzeug innerhalb des Fertigungssystems zu unterschiedlichen Verarbeitungsstationen, wie beispielsweise die Verarbeitungsvorrichtung oder die Prozessreaktionsvorrichtung, transportiert werden kann. Der Handlingroboter oder die Linearvorrichtung kann manuell gesteuert werden oder autonom navigierend ausgebildet sein. Der Handlingroboter kann als Roboterarm ausgebildet sein. Die Linearvorrichtung kann ein Linearachssystem sein. Das Linearsystem kann sich in alle drei Raumrichtungen (x-, y- und z-Achse) bewegen. Dadurch kann der Greifer, der Doppelgreifer oder der Mehrfachgreifer in alle Raumrichtungen verfahren werden. Vorteilhaft weist das Linearsystem zwei Schienen, eine auf den Schienen verfahrbar gelagerte Antriebseinheit, eine auf der Antriebseinheit angeordnete Hubeinheit, eine mit der Hubeinheit verbundene Ein- und Ausfahreinheit und einen Greifer, einen Doppelgreifer oder einen Mehrfachgreifer, der an der Ein- und Ausfahreinheit angeordnet ist, auf. Über die Antriebseinheit kann die Hubeinheit samt Ein- und Ausfahreinheit sowie Greifer, Doppelgreifer oder Mehrfachgreifer horizontal innerhalb des Fertigungssystems verfahren werden. Über die Hubeinheit kann die Ein- und Ausfahreinheit samt Greifer, Doppelgreifer oder Mehrfachgreifer vertikal verfahren werden. Über die Ein- und Ausfahreinheit kann der Greifer, der Doppelgreifer oder der Mehrfachgreifer zur Entnahme eines Formgebungswerkzeuges oder zur Bestückung mit einem Formgebungswerkzeug auf eine Ein- und Ausschleusestation, die Verarbeitungsvorrichtung, die Prozessreaktionsvorrichtungen oder die Entform- und Belegstation zu- oder wegbewegt werden.

In einer vorteilhaften Ausgestaltung weist der Doppelgreifer eine zweite Antriebseinheit auf, mittels der die zweiten Greifbacken aufeinander zu bewegbar oder voneinander weg bewegbar sind, um das Formgebungswerkzeug zwischen den beiden Greifbacken zu greifen und/oder zu verriegeln. Somit ermöglicht die zweite Antriebseinheit die zweite Greifeinrichtung von einer Offenstellung, in welcher die Klemmschienen von den Klemmleisten beabstandet sind, in eine Schließstellung, in welcher die Klemmschienen an den Klemmleisten anliegen, zu überführen und umgekehrt. Die zweite Antriebseinheit kann elektrisch, hydraulisch oder pneumatisch betrieben sein.

In einer vorteilhaften Ausgestaltung weist jede der Greifeinrichtungen des Mehrfachgreifers eine Antriebseinheit auf, die die Greifbacken einer jeden Greifeinrichtung aufeinander zu bewegt oder voneinander weg bewegt, um das Formgebungswerkzeug zwischen den beiden Greifbacken zu greifen und/oder zu verriegeln. Die Antriebseinheiten können elektrisch, hydraulisch oder pneumatisch betrieben sein.

In einer vorteilhaften Ausgestaltung weist der Doppelgreifer eine Basisplatte mit einem Kupplungselement zur Verbindung des Doppelgreifers mit dem Handlingroboter auf, wobei an einem ersten Ende der Basisplatte die erste Greifeinrichtung angeordnet ist und an einem zweiten Ende der Basisplatte die zweite Greifeinrichtung angeordnet ist.

Dadurch wird der technische Vorteil erreicht, dass der Doppelgreifer mit dem Handlingroboter verbunden werden kann. In einer vorteilhaften Ausgestaltung sind die erste Antriebseinheit und die zweite Antriebseinheit auf der Basisplatte angeordnet.

In einer voreilhaften Ausgestaltung weist der Mehrfachgreifer eine Basisplatte mit einem Kupplungselement zur Verbindung des Mehrfachgreifers mit dem Handlingroboter auf.

In einer vorteilhaften Ausgestaltung sind jeder Antriebseinheit eine Ventilsteuerungsvorrichtung zum Steuern der Ventile der jeweiligen Antriebseinheit und ein Sensorsteuerungsvorrichtung zum Steuern von Sensoren der Werkzeuggreifvorrichtung zugeordnet. Die Ventilsteuerungsvorrichtungen und die Sensorsteuerungsvorrichtung können auf der Basisplatte angeordnet sein. Die Sensorsteuerungsvorrichtung kann ein BUS-System sein.

In einer vorteilhaften Ausgestaltung weist das Spritzgusssystem wenigstens eine Entform- und Belegstation auf, die ausgebildet ist, ein Formgebungswerkzeug zu öffnen und/oder zu schließen, ein erhärtetes Formteil zu entformen und/oder ein Einlegeteil in ein Formgebungswerkzeug einzulegen.

Dadurch wird der technische Vorteil erreicht, dass ein automatisiertes Komplettsystem zur Herstellung von Formteilen geschaffen wird. So entnimmt der Handlingroboter mittels seines Greifers, Doppelgreifers oder Mehrfachgreifers das Formgebungswerkzeug der Heizvorrichtung und führt es der Entform- und Belegstation zu, in welcher das Formgebungswerkzeug geöffnet und das erhärtete Formteil entnommen wird. Nach der Entnahme des erhärteten Formteils schließt die Entform- und Belegstation das Formgebungswerkzeug, so dass der Handlingroboter mittels seines Greifers, Doppelgreifers oder Mehrfachgreifers die Spritzgussmaschine für einen neuen Arbeitszyklus mit dem Formgebungswerkzeug bestücken kann. In einer vorteilhaften Ausgestaltung ist die Entform- und Belegstation ausgebildet, ein Einlegeteil in den Formhohlraum des geöffneten Formgebungswerkzeugs einzulegen. In einer vorteilhaften Ausgestaltung erfolgt das Öffnen des Formgebungswerkzeuges, die Entnahme des erhärteten Formteils, das Einlegen eines Einlegeteils in den Formhohlraum des Formgebungswerkzeuges und das Schließen des Formgebungswerkzeuges automatisiert. Vorteilhaft kann das erhärtete Formteil entweder manuell oder automatisiert mittels eines Roboters entnommen werden. Des Weiteren kann ein Einlegteil entweder manuell oder automatisiert mittels eines Roboters in das geöffnete Formgebungswerkzeug eingelegt werden.

In einer vorteilhaften Ausgestaltung ist die Werkzeuggreifvorrichtung ausgebildet, wenigstens ein Formgebungswerkzeug der Entform- und Belegstation zu zuführen und/oder zu entnehmen.

Dadurch wird der technische Vorteil erreicht, dass die Werkzeuggreifvorrichtung ein Formgebungswerkzeug mit einer erhärteten Formmasse von der Heizstation der Entform- und Belegstation zur Entnahme des erhärteten Formteils zuführen kann und das entleerte Formgebungswerkzeug der Entform- und Belegstation entnehmen und der Spritzgussvorrichtung zuführen kann. Wenn das Spritzgusssystem oder die Fertigungssysteme mehrere Entfom- und Belegstation aufweisen, so kann die Werkzeuggreifvorrichtung jeweils ein Formgebungswerkzeug einer Entform- und Belegstation zuführen und/oder entnehmen.

In einer vorteilhaften Ausgestaltung sind wenigstens zwei Heizvorrichtungen oder zwei Prozessreaktionsvorrichtungen vorgesehen.

Dadurch wird der technische Vorteil erreicht, dass die Taktzeiten verkürzt werden können, da abwechselnd jeweils ein Formgebungswerkzeug beheizt oder temperiert, beispielsweise beheizt oder gekühlt, werden kann.

In einer vorteilhaften Ausgestaltung ist diejenige Vorrichtung und/oder Station vervielfacht, die während der Herstellung der Formteile die längste Zykluszeit aufweist.

Dadurch wird der technische Vorteil erreicht, dass die Prozessschritte parallel erfolgen können, da jeder Prozessschritt auf die geforderte Ausbringung optimiert werden kann. Die Anpassung beziehungsweise Abstimmung der Zykluszeiten in den Prozessschritten erfolgt dabei über die Anzahl der erforderlichen Vorrichtungen, wie beispielsweise Spritzgussvorrichtung, Verarbeitungsvorrichtung, Heizvorrichtung, Prozessreaktionsvorrichtung, Wergzeuggreifvorrichtung oder Werkzeugtransportvorrichtung, oder über die Anzahl der Stationen, wie beispielsweise Entform- und Belegstation. Bei unterschiedlichen Formteilgewichten sprich damit auch notwendigen Zykluszeiten wird durch eine entsprechende übergeordnete Steuerung das Handling der Formgebungswerkzeuge in der Heizvorrichtung oder der Prozessreaktionsvorrichtung gesteuert. Das gilt auch für den Fall, dass unterschiedliche Nachbearbeitungsschritte und/oder mit oder ohne Einlegeteile gefertigt werden soll. Für eine gewählte Kombination für eine Produktgruppe ist dann die Ausbringungsmenge vorgegeben und die Variation auf die Herstellkosten sind nur noch die Materialkosten. Die Maschinenkosten sind konstant. Das Spritzgusssystem und die Fertigungssysteme sind materialunabhängig, ist jedoch bevorzugt anwendbar bei Artikeln mit längeren Abkühl- oder Vulkanisationszeiten.

In einer vorteilhaften Ausgestaltung weist das Spritzgusssystem eine Schutzumhausung auf.

Dadurch wird der technische Vorteil erreicht, dass infolge des vollautomatischen Ablaufs Unfälle verhindert werden können.

In einer vorteilhaften Ausgestaltung ist die Verarbeitungsvorrichtung eine Spritzgussvorrichtung oder eine Schäumvorrichtung.

Die Spritzgussvorrichtung kann eine Plastifiziereinheit, eine Spritzeinheit, eine Bedieneinheit und eine Schließeinheit zum Schließen und Zuhalten des Formgebungswerkzeuges aufweisen. Die Plastifiziereinheit kann eine innerhalb eines Zylinders angeordnete Schnecke oder Extruder, eine Schneckenantriebsvorrichtung, einen Trichter zum Einfüllen der zu verarbeitenden Formmasse, eine Heizeinrichtung zum Plastifizieren der eingefüllten Formmasse und eine Düse zum Befüllen der Spritzeinheit mit der plastifizierten Formmasse aufweisen. Die Spritzeinheit kann einen Zylinder mit einer Düse und einen innerhalb des Zylinders beweglichen Kolben aufweisen. Durch Bewegung des Kolbens wird die im Zylinder befindliche plastifizierte Formmasse über die Düse in den Formhohlraum eines Formgebungswerkzeugs eingespritzt. In einer vorteilhaften Ausgestaltung beheizt die Spritzgussvorrichtung das Formgebungswerkzeug während des Einspritzens.

Die Schäumvorrichtung kann eine Mischeinheit, einen Befüllkopf, eine Bedieneinheit und eine Schließeinheit zum Schließen und Zuhalten des Formgebungswerkzeuges aufweisen. Die Mischeinheit kann eine Materialförderung und eine Einspritzeinheit aufweisen. In einer vorteilhaften Ausgestaltung beheizt die Schäumvorrichtung das Formgebungswerkzeug während des Einspritzens.

In einer vorteilhaften Ausgestaltung weist die Schäumvorrichtung eine Vakuumeinrichtung zum Evakuieren der Umgebung des Formgebungswerkzeugs auf.

Dadurch wird der technische Vorteil erreicht, dass zum Befüllen des Formgebungswerkzeugs ein geringerer Druck erforderlich ist, so dass eine geringere Kraft zum Zuhalten des Formgebungswerkzeugs erforderlich ist. Bei gleichbleibender Zuhaltekraft kann somit eine größere Kraft zum Zudrücken des Formgebungswerkzeugs aufgewendet werden, so dass ein verbessertes Zudrücken des Formgebungswerkzeugs gegeben ist.

In einer vorteilhaften Ausgestaltung ist die Prozessreaktionsvorrichtung eine Heizvorrichtung und/oder eine Kühlvorrichtung.

Dadurch wird der technische Vorteil erreicht, dass die in das Formgebungswerkzeug eingespritzte oder eingeschäumte Formmasse beheizt und/oder gekühlt werden kann, damit die Formmasse zu einem Formteil aushärtet.

In einer vorteilhaften Ausgestaltung weist das Spritzgusssystem oder das Fertigungssystem eine Ein- und Ausschleusestation auf, über die Formgebungswerkzeuge in das System eingebracht oder Formgebungswerkzeuge aus dem System entfernt werden können. In einer vorteilhaften Ausgestaltung ist die Ein- und Ausschleusestsation eine Wechselstation oder ein Drehtisch.

Gemäß einem weiteren Aspekt wird ein Verfahren zur Herstellung von Formteilen aus spritzfähigen oder aus schäumfähigen Formmassen mittels des Spritzgusssystems oder des Fertigungssystems vorgeschlagen. Hierbei wird zunächst die Spritzgussvorrichtung oder die Verarbeitungsvorrichtung mit einem Formgebungswerkzeug mittels der Werkzeuggreifvorrichtung oder der Werkzeugtransportvorrichtung bestückt. Anschließend wird die spritzfähige Formmasse in das Formgebungswerkzeug eingespritzt. Danach wird das Formgebungswerkzeug mittels der Werkzeuggreifvorrichtung oder der Werkzeugtransportvorrichtung verriegelt und entnommen und der Heizvorrichtung oder der Prozessreaktionsvorrichtung zugeführt. Anschließend wird die Formmasse in der Heizvorrichtung oder der Prozessreaktionsvorrichtung erwärmt oder in der Prozessreaktionsvorrichtung gekühlt. Nach dem Erwärmen wird das Formgebungswerkzeug mittels der Werkzeuggreifvorrichtung oder der Werkzeugtransportvorrichtung entnommen und der Entform- und Belegstation zugeführt. Innerhalb der Entform- und Belegstation wird das Formgebungswerkzeug geöffnet, das erhärtete Formteil entnommen und das Formgebungswerkzeug geschlossen. Schließlich wird das Formgebungswerkzeug mittels der Werkzeuggreifvorrichtung oder der Werkzeugtransportvorrichtung entnommen und der Spritzgussvorrichtung oder der Verarbeitungsvorrichtung zugeführt.

Gemäß einem weiteren Aspekt wird ein Verfahren zur Herstellung von Formteilen aus Formmassen, insbesondere aus spritzfähigen oder aus schäumfähigen Formmassen, mittels eines Fertigungssystems vorgeschlagen. Hierbei wird zunächst die Verarbeitungsvorrichtung mit einem Formgebungswerkzeug mittels der Werkzeugtransportvorrichtung bestückt. Anschließend wird das Formgebungswerkzeug mit einer Formmasse befüllt, und parallel dazu wird ein leeres Formgebungswerkzeug gegriffen, beispielsweise der Entform- und Belegstation oder der Ein- und Ausschleusestation entnommen. Danach wird das mit der Formmasse befüllte Formgebungswerkzeug aus der Verarbeitungsvorrichtung mittels der Werkzeugtransportvorrichtung entnommen, und das von der Werkzeugtransportvorrichtung gehaltene und leere Formgebungswerkzeug wird der Verarbeitungsvorrichtung mittels der Werkzeugtransportvorrichtung zugeführt. Anschließend wird das mit der Formmasse befüllte Formgebungswerkzeug der Prozessreaktionsvorrichtung mittels der Werkzeugtransportvorrichtung zugeführt. In der Prozessreaktionsvorrichtung wird die Formmasse erwärmt oder gekühlt, und anschließend wird das Formgebungswerkzeug aus der Prozessreaktionsvorrichtung mittels der Werkzeugtransportvorrichtung entnommen. Danach wird das Formgebungswerkzeug der Entform- und Belegstation mittels der Werkzeugtransportvorrichtung zugeführt. Schließlich wird das Formgebungswerkzeug geöffnet, und das erhärtete Formteil wird entnommen, und das Formgebungswerkzeug wird innerhalb der Entform- und Belegstation geschlossen. In einer vorteilhaften Ausgestaltung verriegelt die Werkzeugtransportvorrichtung das Formgebungswerkzeug vor dessen Entnahme aus der Verarbeitungsvorrichtung und/oder der Prozessreaktionsvorrichtung.

Wenn das Spritzgussystem oder die Fertigungssysteme mehrere Spritzgussvorrichtungen, Verarbeitungsvorrichtungen, Heizvorrichtungen, Prozessreaktionsvorrichtungen, Werkzeuggreifvorrichtungen oder Werkzeugtransportvorrichtungen und/oder Entform- und Belegstationen aufweist, dann wird das Spritzgusssystem oder werden die Fertigungssysteme derart gesteuert, dass ein Handling der Formgebungswerkzeuge dergestalt erfolgt, dass ein Formgebungswerkzeug derjenigen Vorrichtung beziehungsweise Station zugeführt wird, die frei ist, beziehungsweise ein Formgebungswerkzeug derjenigen Vorrichtung beziehungsweise Station entnommen wird, das für einen nächsten Prozessschritt bereit ist.

In einer vorteilhaften Ausgestaltung wird der Prozessreaktionsvorrichtung vor dem Zuführen des mit der Formmasse befüllten Formgebungswerkzeugs ein Formgebungswerkzeug mittels der Werkzeugtransportvorrichtung entnommen und dieses der Beleg- und Entnahmestation zugeführt.

In einer vorteilhaften Ausgestaltung wird der Entform- und Belegstation vor dem Zuführen des Formgebungswerkzeugs ein Formgebungswerkzeug mittels der Werkzeugtransportvorrichtung entnommen, und dieses wird im Anschluss der Verarbeitungsvorrichtung zugeführt.

Nachfolgend werden ein Spritzgusssystem, Fertigungssysteme, Verfahren zur Herstellung eines Formteils mittels des Spritzgusssystems oder der Fertigungssysteme sowie weitere Merkmale und Vorteile anhand von Ausführungsbeispielen näher erläutert, die in den Figuren schematisch dargestellt sind. Hierbei zeigt:
- Fig. 1: eine Draufsicht eines schematisch dargestellten Spritzgusssystems;
- Fig. 2: eine perspektivische Darstellung eines Doppelgreifers gemäß einer ersten Ausführungsform;
- Fig. 3: eine Seitenansicht von dem Doppelgreifer gemäß der ersten Ausführungsform;
- Fig. 4: eine Draufsicht von dem Doppelgreifer gemäß der ersten Ausführungsform;
- Fig. 5: eine Vorderansicht eines Formgebungswerkzeugs und einer ersten Greifeinrichtung in dessen Offenstellung;
- Fig. 6: eine Vorderansicht des Formgebungswerkzeugs und der ersten Greifvorrichtung in dessen Schließstellung;
- Fig. 7: eine Seitenansicht eines Doppelgreifer gemäß einer zweiten Ausführungsform;
- Fig. 8: eine Seitenansicht eines Doppelgreifer gemäß einer dritten Ausführungsform;

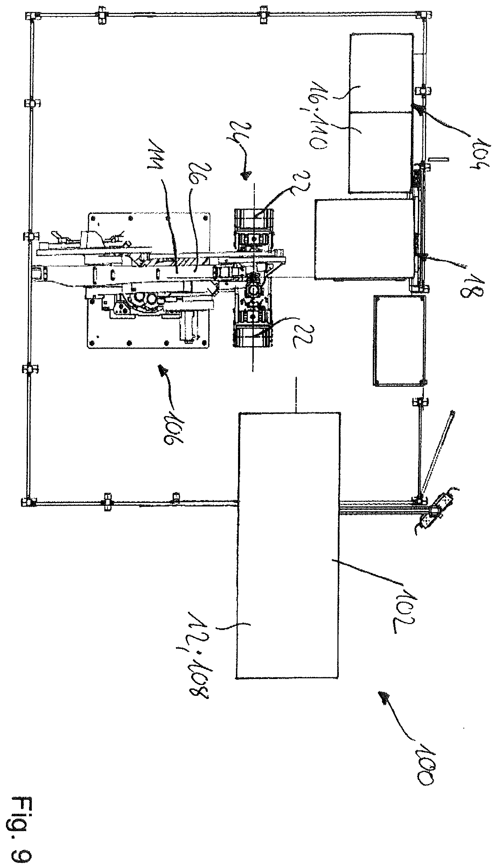

- Fig. 9: eine Draufsicht eines schematisch dargestellten Fertigungssystems gemäß einer ersten Ausführungsform;
- Fig. 10: eine Draufsicht eines schematisch dargestellten Fertigungssystems gemäß einer zweiten Ausführungsform;
- Fig. 11: eine Draufsicht eines schematisch dargestellten Fertigungssystems gemäß einer dritten Ausführungsform; und
- Fig. 12: eine perspektivische Darstellung des in Fig. 11 gezeigten Linearsystems.

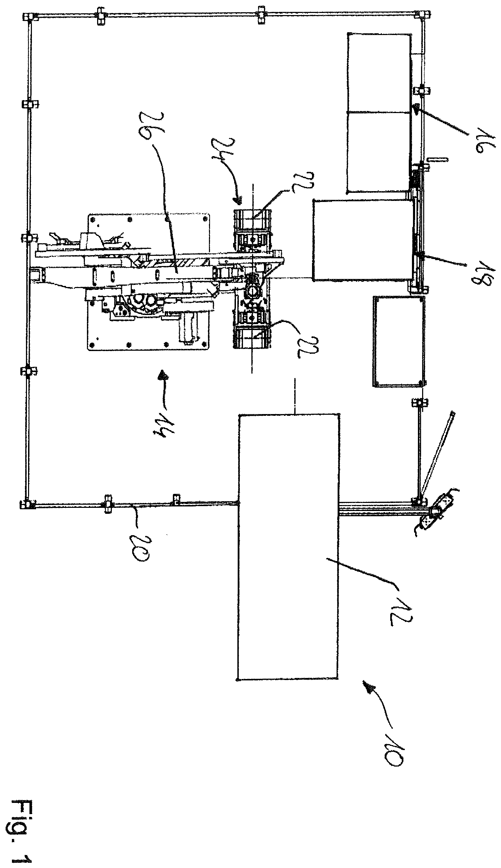

In Fig. 1 ist ein Spritzgusssystem 10 zur vollautomatischen Herstellung von Formteilen aus spritzfähigen Formmassen gezeigt.

Das Spritzgusssystem 10 weist eine Spritzgussvorrichtung 12, eine Werkzeuggreifvorrichtung 14, zwei Heizvorrichtungen 16, eine Entform- und Belegstation 18 und eine Schutzumhausung 20 auf.

Die Spritzgussvorrichtung 12 ist vorliegend eine Spritzgussmaschine, die ausgebildet ist, eine spritzfähige Formmasse, wie beispielsweise einen Kunststoff, insbesondere ein Elastomer, in ein Formgebungswerkzeug 22 einzuspritzen. Hierzu kann die Spritzgussvorrichtung 12 den zugeführten Kunststoff plastifizieren und in einen nicht dargestellten Formhohlraum des Formgebungswerkzeuges 22 einspritzen.

Die Werkzeuggreifvorrichtung 14 weist einen Doppelgreifer 24 zum Greifen und/oder Verriegeln von Formgebungswerkzeugen 22 und einen Handlingroboter 26 zum Bewegen des Doppelgreifers 24 auf.

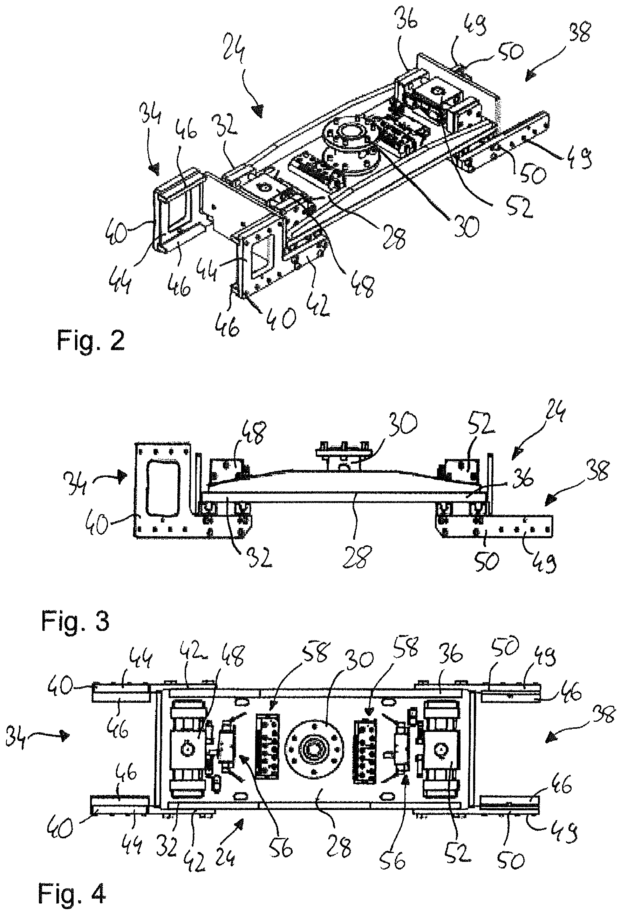

Wie in den Figuren 2 bis 4 ersichtlich ist, weist der Doppelgreifer 24 eine Basisplatte 28 und ein Kupplungselement 30 zur Kopplung des Doppelgreifers 24 mit dem Handlingroboter 26 auf. Ferner weist der Doppelgreifer 24 an einem ersten Ende 32 der Basisplatte 28 eine erste Greifeinrichtung 34, eine erste Antriebseinheit 48, an einem zweiten Ende 36 der Basisplatte 28 eine zweite Greifeinrichtung 38 und eine zweite Antriebseinheit 52 auf.

Die erste Greifeinrichtung 34 weist zwei erste Greifbacken40 zum Greifen und Verriegeln des Formgebungswerkzeugs 22 auf. Die beiden ersten Greifbacken 40 sind aus Metall und weisen einen horizontalen Abschnitt 42 und einen O-förmigen Abschnitt 44 auf. An den Innenseiten der O-förmigen Abschnitte 44 sind zwei zueinander beabstandete Klemmschienen 46 angeordnet. Die Klemmschienen 46 sind mit einer Schräge 47 versehen. Der horizontale Abschnitt 42 ist mit der ersten Antriebseinheit 48 verbunden. Über die erste Antriebseinheit 48 können die beiden ersten Greifbacken 40 aufeinander zu und voneinander weg bewegt werden. Die erste Antriebseinheit 48 kann elektrisch, hydraulisch oder pneumatisch betrieben sein.

Die zweite Greifeinrichtung 28 ist aus Metall und weist zwei zweite Greifbacken 49 auf, die als Stegplatten 50 ausgebildet sind. Auf den Innenseiten der zweiten Greifbacken 49 sind Klemmschienen 46 angeordnet. Die Stegplatten 50 sind mit der zweiten Antriebseinheit 52 verbunden. Über die zweite Antriebseinheit 52 können die beiden zweiten Greifbacken 49 aufeinander zu und voneinander weg bewegt werden. Die zweite Antriebseinheit 48 kann elektrisch, hydraulisch oder pneumatisch betrieben sein.

Jeder Antriebseinheit 48 sind zudem eine Ventilsteuerungsvorrichtung 56 zum Steuern der Ventile der jeweiligen Antriebseinheit 48 und ein Sensorsteuerungsvorrichtung 58 zum Steuern von Sensoren der Werkzeuggreifvorrichtung 14 zugeordnet, die auf der Basisplatte 28 angeordnet sind, wie insbesondere ein Fig. 4 ersichtlich ist.

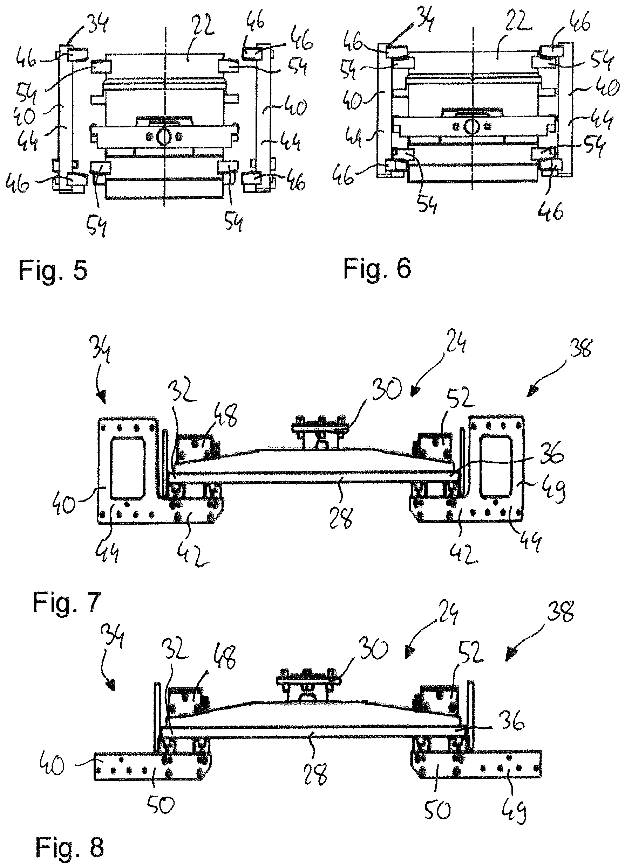

Mittels der ersten Greifeinrichtung 34 kann ein Formgebungswerkzeug 22 gegriffen und gleichzeitig verriegelt werden. Hierzu weist das Formgebungswerkzeug 22 Klemmleisten 54 auf, die zwischen den Klemmschienen 46 angeordnet und mit diesen zusammenwirken. Die Klemmleisten 54 sind ebenfalls mit einer Schräge 47 versehen, die mit den Schrägen 47 der Klemmschienen 46 zusammenwirken, wie in den Figuren 5 bis 6 dargestellt ist.

Zum Greifen und Verriegeln des Formgebungswerkzeugs 22 mittels der ersten Greifeinrichtung 34 werden die beiden ersten Greifbacken 40 in der in Fig. 5 gezeigten Offenstellung positioniert, in welcher die ersten Greifbacken 40 von dem Formgebungswerkzeug 22 beabstandet sind. Zum Greifen und Verriegeln des Formgebungswerkzeugs 22 werden die beiden ersten Greifbacken 40 mittels der ersten Antriebseinheit 48 in die in Fig. 6 gezeigte Schließstellung bewegt. Wie in Fig. 6 ersichtlich ist, sind in der Schließstellung die beiden Klemmleisten 54 zwischen den beiden Klemmschienen 46 angeordnet und liegen an selbigen an. Die horizontal eingeleitete Schließbewegung wird über die Schrägen 47 und die sich daraus ergebende Keilwirkung in eine vertikale Klemmbewegung mit wesentlich höherer Schließkraft übersetzt. Dadurch wird ein Aufdrücken des Formgebungswerkzeuges 22 aufgrund des darin vorherrschenden Drucks nach dem Einspritzen der Formmasse effektiv verhindert.

Mittels der zweiten Greifeinrichtung 38 kann ein Formgebungswerkzeug 22 gegriffen werden. Hierzu werden die beiden zweiten Greifbacken 49 in der Offenstellung positioniert, in welcher die beiden zweiten Greifbacken 49 von dem Formgebungswerkzeug 22 beanstandet sind. Anschließend werden die zweiten Greifbacken 49 mittels der zweiten Antriebseinheit 52 aufeinander zu bewegt, so dass die Klemmschienen 46 an den Klemmleisten 54 anliegen beziehungsweise die Klemmleisten 54 auf den Klemmschienen 46 aufliegen.

Die Heizvorrichtung 16 dient dazu, die in dem Formgebungswerkzeug 22 eingespritzte Formmasse zu erwärmen, so dass diese zu einem Formteil aushärten. Damit das Formgebungswerkzeug während des Heizens nicht aufgedrückt wird, ist die Heizvorrichtung 16 ausgebildet, das Formgebungswerkzeug 22 zu verriegeln.

In der Entform- und Belegstation 18 kann das Formgebungswerkzeug 22 geöffnet und das erhärtete Formteil entnommen werden. Ferner kann in den leeren Formhohlraum des Formgebungswerkzeugs 22 ein nicht dargestelltes Einlegeteil eingelegt werden. Nach der Entnahme des erhärteten Formteils und gegebenenfalls der Einlage eines Einlegeteils wird das Formgebungswerkzeug 22 in der Entform- und Belegstation 18 wieder geschlossen.

Die Schutzumhausung 20 umgibt die Bestandteile des Spritzgusssystems 10, wie in Fig. 1 ersichtlich ist, so dass Unfälle infolge des vollautomatischen Ablaufs verhindert werden können.

Im Folgenden wird ein Verfahren zur Herstellung eines Formteils mittels des Spritzgusssystems 10 erläutert. Mittels der zweiten Greifeinrichtung 38 wird ein Formgebungswerkzeug 22 der Entform- und Belegstation 18 entnommen und der Spritzgussvorrichtung 12 zugeführt. Die Spritzgussvorrichtung 10 wird geschlossen und die spritzfähige Formmasse wird in den Formhohlraum eingespritzt. Während des Einspritzens wird das Formgebungswerkzeug 22 in der Spritzgussvorrichtung 12 beheizt. Nach dem Einspritzen der spritzfähigen Formmasse in das Formgebungswerkzeug 22 wird das Formgebungswerkzeug 22, wie zuvor beschrieben, mittels der ersten Greifeinrichtung 34 gegriffen und verriegelt und dann der Spritzgussvorrichtung 12 entnommen. Zur Bestückung der Spritzgussvorrichtung 12 mit einem neuen Formgebungswerkzeug 22 wird der Doppelgreifer 24 um 180° gedreht, und ein zuvor mittels der zweiten Greifeinrichtung 38 von der Entform- und Belegstation 18 entnommenes Formgebungswerkzeug 22 wird der Spritzgussvorrichtung 12 zugeführt und ein erneuter Einspritzvorgang kann erfolgen. Danach verfährt der Handlingroboter 26 das verriegelte Formgebungswerkzeug 22 zum Erwärmen der eingespritzten Formmasse zu einer der beiden Heizvorrichtungen 16 und führt das Formgebungswerkzeug 22 der Heizvorrichtung 16 zu. In der Heizvorrichtung 16 wird das Formgebungswerkzeug 22 verriegelt, und die in das Formgebungswerkzeug 22 eingespritzte Formmasse wird erwärmt und dadurch ausgehärtet. Nach dem Erwärmen der eingespritzten Formmasse und deren Aushärtung greift der Doppelgreifer 24 mittels der zweiten Greifeinrichtung 38 das Formgebungswerkzeug 22 und führt es der Entform- und Belegstation 18 zu. In der Entform- und Belegstation 18 wird das Formgebungswerkzeug 22 geöffnet, und das vulkanisierte und erhärtete Formteil wird entnommen. Gegebenenfalls wird ein Einlegeteil in das Formgebungswerkzeug 22 eingelegt. Anschließend wird das Formgebungswerkzeug 22 wieder geschlossen, und der Doppelgreifer 24 nimmt das leere Formgebungswerkzeug 22 mittels seiner zweiten Greifeinrichtung 38 und bestückt damit die Spritzgussvorrichtung 12.

Bei dem Spritzgusssystem 10 ist die Heizvorrichtung 16 außerhalb der Spritzgussvorrichtung 12 angeordnet, so dass das Erwärmen der Formmasse außerhalb der Spritzgussmaschine 12 erfolgt. Dadurch steht die Spritzgussvorrichtung 12 unmittelbar nach dem Einspritzen für einen neuen Arbeitszyklus zur Verfügung. Infolgedessen sind die Taktzeiten der Spritzgussvorrichtung 12 unabhängig von der Heizzeit der Formteile, so dass eine effiziente und damit wirtschaftliche und kostengünstige Herstellung gewährleistet werden kann. Zudem gewährleistet die Werkzeuggreifvorrichtung 14 einen flexiblen und effizienten Transport eines Formgebungswerkzeuges 22 von der Spritzgussvorrichtung 12 zu der Heizvorrichtung 16, von der Heizvorrichtung 16 zu der Entform- und Belegstation 18 und von der Entform- und Belegstation 18 zu der Spritzgussvorrichtung 10. Darüber hinaus kann die Werkzeuggreifvorrichtung 14 das Formgebungswerkzeug 22 verriegeln, um ein Aufdrücken des Formgebungswerkzeugs 22 aufgrund des darin vorherrschenden Drucks nach dem Einspritzen der Formmasse während des Transports zu verhindern.

In Fig. 7 ist eine zweite Ausführungsform des Doppelgreifers 24 gezeigt, die sich von der in den Figuren 2 bis 4 gezeigten ersten Ausführungsform dadurch unterscheidet, dass der Doppelgreifer 24 zwei Formgebungswerkzeuge 22 greifen und verriegeln kann. Hierzu weisen die zweiten Greifbacken 49 zwei zueinander beabstandete Klemmschienen 46 auf. Das Greifen und Verriegeln mittels der zwei zueinander beabstandeten Klemmschienen 46 aufweisenden zweiten Greifbacken 49 erfolgt wie bei der zuvor beschriebenen ersten Greifeinrichtung 34.

Fig. 8 zeigt eine dritte Ausführungsform des Doppelgreifers 24, wobei sowohl die erste Greifeinrichtung 34 als auch die zweite Greifeinrichtung 38 lediglich zum Greifen jeweils eines Formgebungswerkzeugs 22 ausgebildet sind. Hierzu weisen sowohl die ersten Greifbacken 40 als auch die zweiten Greifbacken 49 jeweils nur eine Klemmschiene 46 auf. Das Greifen eines Formgebungswerkzeugs 22 erfolgt wie bei der zuvor beschriebenen zweiten Greifeinrichtung 38.

In Fig. 8 ist ein Fertigungssystem 100 zur Herstellung von Formteilen aus spritzfähigen oder schäumfähigen Formmassen dargestellt.

Das Fertigungssystem 100 weist eine Verarbeitungsvorrichtung 102, zwei Prozessreaktionsvorrichtungen 104, eine Werkzeugtransportvorrichtung 106, eine Entform- und Belegstation 18 und eine Schutzumhausung 20 auf.

Wenn das Fertigungssystem 100 zur Herstellung von Formteilen aus spritzfähigen Formmassen eingesetzt wird, dann ist die Verarbeitungsvorrichtung 102 als eine Spritzgussvorrichtung 12 ausgebildet, und die Prozessreaktionsvorrichtung 104 ist als eine Heizvorrichtung 16 ausgebildet.

Wenn das Fertigungssystem 100 zur Herstellung von Formteilen aus schäumfähigen Formmassen eingesetzt wird, dann ist die Verarbeitungsvorrichtung 102 als Schäumvorrichtung 108 ausgebildet, und die Prozessreaktionsvorrichtung 104 ist als Kühlvorrichtung 110 ausgebildet. Die Schäumvorrichtung 108 kann eine nicht dargestellte Vakuumeinrichtung zum Evakuieren der Umgebung des Formgebungswerkzeugs 22 aufweisen.

Die Werkzeugtransportvorrichtung 106 weist einen Doppelgreifer 24 und eine mit dem Doppelgreifer verbundene Manipulationsvorrichtung 111 zum Bewegen des Doppelgreifers 24 auf. Die Manipulationsvorrichtung 111 ist vorliegend ein Handlingroboter 26. Der Aufbau und die Funktionsweise des Doppelgreifers 24 und des Handlingroboters 26 entspricht dem Aufbau und der Funktionsweise des Doppelgreifers 24 und des Handlingroboters 26 wie bei dem zuvor beschriebenen Spritzgusssystem 10. Vorliegend weist der Doppelgreifer 24 die in den Figuren 2 bis 4 dargestellte erste Ausführungsform auf. Ferner kann der Doppelgreifer 24 auch eine der in den Figuren 7 oder 8 dargestellten Ausführungsformen aufweisen.

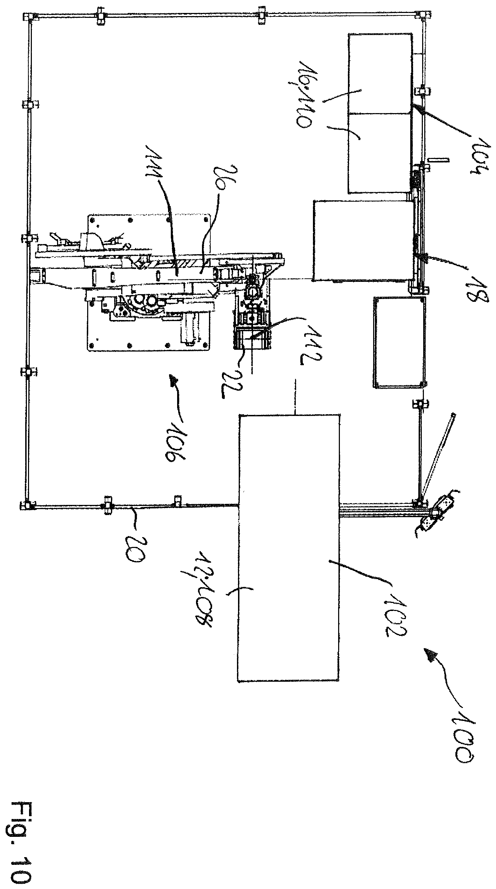

In Fig. 10 ist ein Fertigungssystem 100 gemäß einer zweiten Ausführungsform dargestellt, das sich von der ersten Ausführungsform dadurch unterscheidet, dass die Werkzeugtransportvorrichtung 106 einen Greifer 112 aufweist, der ausgebildet ist, ein Formgebungswerkzeug zu greifen und/oder zu verriegeln. Wenn der Greifer lediglich ein Formgebungswerkzeug greifen kann, dann weisen dessen Greifbacken lediglich eine Klemmschiene auf. Wenn der Greifer 112 ein Formgebungswerkzeug 22 greifen und verriegeln kann, dann weisen dessen Greifbacken zwei zueinander beabstandete Klemmschienen auf. Die Funktionsweise des Greifers 112 zum Greifen und/oder Verriegeln eines Formgebungswerkzeuges entspricht der Funktionsweise der ersten Greifeinrichtung 34 beziehungsweise der zweiten Greifeinrichtung 38 des Spritzgusssystems 10. Wenn der Greifer 112 ein Formgebungswerkzeug 22 lediglich greifen kann, dann weist das Formgebungswerkzeug 22 eine nicht dargestellte Verriegelungsvorrichtung auf, mittels derer das Formgebungswerkzeug verriegelbar ist, um ein Aufdrücken während des Transports aufgrund des vorherrschenden Innendrucks zu verhindern.

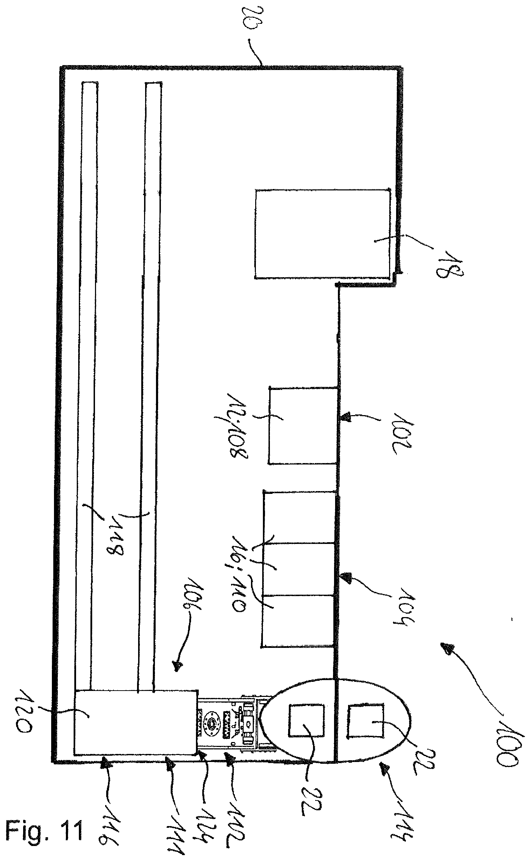

In Fig. 11 ist ein Fertigungssystem 100 gemäß einer dritten Ausführungsform dargestellt, das sich von den anderen beiden Ausführungsformen in der Ausgestaltung der Manipulationsvorrichtung 111 und dem Vorsehen einer Ein- und Ausschleusestation 114 unterscheidet. Des Weiteren weist das in Figur 11 gezeigte Fertigungssystem 100 vier Prozessreaktionsvorrichtungen 104 auf.

Wenn mit dem in Figur 11 dargestellten Fertigungssystem 100 spritzfähige Formmassen verarbeitet werden sollen, dann ist die Verarbeitungsvorrichtung 102 eine Spritzgussvorrichtung 12 und die Prozessreaktionsvorrichtung 104 ist eine Heizvorrichtung 16. Wenn mit dem in Figur 11 dargestellten Fertigungssystem 100 schäumfähige Formmassen verarbeitet werden sollen, dann ist die Verarbeitungsvorrichtung 102 eine Schäumvorrichtung108 und die Prozessreaktionsvorrichtung 104 ist eine Kühlvorrichtung 110.

Die Ein- und Ausschleusestation 114 dient dazu, dem Fertigungssystem 100 Formgebungswerkzeuge 22 zuzuführen oder dem Fertigungssystem 100 Formgebungswerkzeuge 22 zu entnehmen. Die Ein- und Ausschleusestation 114 ist vorliegend eine Wechselstation in Form eines Drehtisches.

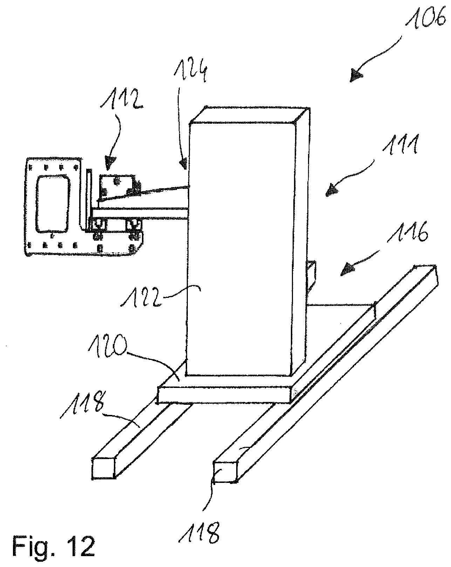

Die Manipulationsvorrichtung 111 ist als ein Linearsystem 116 ausgebildet, das in Fig. 12 näher dargestellt ist. Das Linearsystem 116 weist zwei Schienen 118, eine auf den Schienen 118 verfahrbar gelagerte Antriebseinheit 120, eine auf der Antriebseinheit 120 angeordnete Hubeinheit 122, eine mit der Hubeinheit 122 verbundene Ein- und Ausfahreinheit 124 und einen Greifer 112, der an der Ein- und Ausfahreinheit 124 angeordnet ist, auf. Der Greifer 112 entspricht dem Auf bau und der Funktionsweise des in Figur 10 gezeigten Greifers 112.

Über die Antriebseinheit 120 kann die Hubeinheit 122 samt Ein- und Ausfahreinheit 124 und dem Greifer 112 horizontal auf den Schienen 118 verfahren werden. Über die Hubeinheit 122 kann die Ein- und Ausfahreinheit 124 und der Greifer 112 vertikal verfahren werden.

Über die Ein- und Ausfahreinheit 124 kann der Greifer 112 zur Entnahme eines Formgebungswerkzeuges 22 oder zur Bestückung mit einem Formgebungswerkzeug 22 auf die Ein- und Ausschleusestation 114, die Verarbeitungsvorrichtung 102, die Prozessreaktionsvorrichtungen 104 oder die Entform- und Belegstation 18 zu- oder wegbewegt werden.

Im Folgenden wird ein möglicher Prozessablauf und damit ein mögliches Verfahren zur Herstellung eines Formteils aus spritzfähigen oder schäumfähigen Formmassen mittels des in Fig. 11 dargestellten Fertigungssystems 100 beschrieben. Zunächst wird über die Ein- und Ausschleusestation 114 ein Formgebungswerkzeug 22 in das Fertigungssystem 100 eingebracht, indem das Linearsystem zu der Ein- und Ausschleusestation 114 verfahrt und das Formgebungswerkzeug 22 entnimmt. Anschießend führt das Linearsystem der Verarbeitungsvorrichtung 102 das Formgebungswerkzeug 22. Nach dem Befüllen des Formgebungswerkzeuges 22 mit einer spritzfähigen oder schäumbaren Formmasse entnimmt das Linearsystem 116 das Formgebungswerkzeug 22 der Verarbeitungsvorrichtung 102 und führt es einer Prozessreaktionsvorrichtung 104 zu. Nach dem Heizen oder Kühlen der Formmasse entnimmt das Linearsystem 116 das Formgebungswerkzeug 22 der Prozessreaktionsvorrichtung 104 und führt es der Entform- und Belegstation 18 zu. Während eine Formmasse in ein Formgebungswerkzeug 22 eingespritzt wird, kann das Linearsystem 116 entweder ein weiteres Formgebungswerkzeug über die Ein- und Ausschleusestation 114 in das Fertigungssystem 100 einführen, ein weiteres in der Prozessreaktionsvorrichtung 104 befindliches Formgebungswerkzeug 22 entnehmen und der Entform- und Belegstation 18 zuführen oder ein leeres Formgebungswerkzeug der Ein- und Ausschleusestation 114 zuführen, über welches das Formgebungswerkzeug 22 beispielsweise zum Reinigen oder zur Reparatur aus dem Fertigungssystem 100 entnommen werden kann. Die Entnahme der Formteile aus der Entform- und Belegstation 18 beziehungsweise das Bestücken der Formgebungswerkzeuge 22 mit einem Einlegteil kann entweder manuell oder automatisiert mittels eines nicht dargestellten Roboters erfolgen. Wenn ein Einlegteil in das Formgebungswerkzeug 22 vor dem Befüllen eingelegt wird, so führt das Linearsystem 116 das Formgebungswerkzeug 22 zunächst der Entform- und Belegstation 18 zu und im Anschluss daran entnimmt das Linearsystem 116 das mit dem Einlegteil versehene Formgebungswerkzeug 22 der Entform- und Belegstation 18 und führt es der Verarbeitungsvorrichtung 102 zu.

Um ein Formgebungswerkzeug 22 der Ein- und Ausschleusestation 114, der Verarbeitungsvorrichtung 102, der Prozessreaktionsvorrichtung 104 oder der Entform- und Belegstation 18 zu entnehmen beziehungsweise zuzuführen, verfährt das Linearsystem 116 zu der der Ein- und Ausschleusestation 114, der Verarbeitungsvorrichtung 102, der Prozessreaktionsvorrichtung 104 oder der Entform- und Belegstation 18, indem die Antriebseinheit 120 den Greifer 1112 horizontal und die Hubeinheit 122 den Greifer 112 vertikal auf die Höhe der Ein- und Ausschleusestation 114, der Verarbeitungsvorrichtung 102, der Prozessreaktionsvorrichtung 104 oder der Entform- und Belegstation 18verfährt. Anschließend wird der Greifer 112 über die Ein- und Ausfahreinheit 124 zu der Ein- und Ausschleusestation 114, der Verarbeitungsvorrichtung 102, der Prozessreaktionsvorrichtung 104 oder der Entform- und Belegstation 18 verfahren, so dass der Greifer 112, wie zuvor beschrieben, ein Formgebungswerkzeug 22 der Ein- und Ausschleusestation 114, der Verarbeitungsvorrichtung 102, der Prozessreaktionsvorrichtung 104 oder der Entform- und Belegstation 18 entnehmen oder zuführen kann. Anschließend bewegt die Ein- und Ausfahreinheit den Greifer 112 mit oder ohne Formgebungswerkzeug 22 von der Ein- und Ausschleusestation 114, der Verarbeitungsvorrichtung 102, der Prozessreaktionsvorrichtung 104 oder der Entform- und Belegstation 18 weg und verfahrt dann der Ein- und Ausschleusestation 114, der Verarbeitungsvorrichtung 102, der Prozessreaktionsvorrichtung 104 oder der Entform- und Belegstation 18.

Die Fertigungssysteme 100 zeichnen sich durch die Möglichkeit der parallelen Arbeitsweise der Ein- und Ausschleusestation 114, der Verarbeitungsvorrichtung 102, der Prozessreaktionsvorrichtung 104 und der Entform- und Belegstation 18 und dadurch einer gezielten Auslastung der Ein- und Ausschleusestation 114, der Verarbeitungsvorrichtung 102, der Prozessreaktionsvorrichtung 104 und der Entform- und Belegstation 18 aus. Da bei den Fertigungssystemen 100 die Prozessreaktionsvorrichtungen 104 außerhalb der Verarbeitungsvorrichtung 102 angeordnet sind, erfolgt die Prozessreaktion der Formmasse außerhalb der Verarbeitungsvorrichtung 102. Dadurch steht die Verarbeitungsvorrichtung 102 unmittelbar nach dem Befüllen für einen neuen Arbeitszyklus zur Verfügung. Dadurch sind die Taktzeiten der Verarbeitungsvorrichtung 102 unabhängig von der Prozessreaktionszeit der Formteile, so dass eine effiziente und damit wirtschaftliche und kostengünstigere Herstellung gewährleistet werden kann. Zudem ermöglichen die Fertigungssysteme 100 eine parallele Arbeitsweise und dadurch eine gezielte Auslastung der Ein- und Ausschleusestation 114, der Verarbeitungsvorrichtung 102, der Prozessreaktionsvorrichtung 104 und der Entform- und Belegstation 18. Ferner ermöglichen die Fertigungssysteme 100 eine flexible Fertigung und bedingt dadurch eine hohe Variantenvielfalt an Formteilen.

### Bezugszeichenliste

- 10: Spritzgusssystem
- 12: Spritzgussvorrichtung
- 14: Werkzeuggreifvorrichtung
- 16: Heizvorrichtung
- 18: Entform- und Belegstation
- 20: Schutzumhausung
- 22: Formgebungswerkzeug
- 24: Doppelgreifer
- 26: Handlingroboter
- 28: Basisplatte
- 30: Kupplungselement
- 32: erstes Ende
- 34: erste Greifeinrichtung
- 36: zweites Ende
- 38: zweite Greifeinrichtung
- 40: erste Greifbacke
- 42: horizontaler Abschnitt
- 44: O-förmiger Abschnitt
- 46: Klemmschiene
- 47: Schräge
- 48: erste Antriebseinheit
- 49: zweite Greifbacke
- 50: Stegplatte
- 52: zweite Antriebseinheit
- 54: Klemmleiste
- 56: Ventilsteuerungsvorrichtung
- 58: Sensorsteuerungsvorrichtung

- 100: Fertigungssystem
- 102: Verarbeitungsvorrichtung
- 104: Prozessreaktionsvorrichtungen
- 106: Werkzeugtransportvorrichtung
- 108: Schäumvorrichtung
- 110: Kühlvorrichtung
- 111: Manipulationsvorrichtung
- 112: Greifer
- 114: Ein- und Ausschleusestation
- 116: Linearsystem
- 118: Schienen
- 120: Antriebseinheit
- 122: Hubeinheit
- 124: Ein- und Ausfahreinheit

## Patentansprüche

1. Spritzgusssystem (10) zur Herstellung von Formteilen aus spritzfähigen Formmassen, aufweisend wenigstens eine Spritzgussvorrichtung (12), die ausgebildet ist, eine spritzfähige Formmasse in ein Formgebungswerkzeug (22) einzuspritzen, wenigstens eine Heizvorrichtung (16), die ausgebildet ist, die in das Formgebungswerkzeug (22) eingespritzte Formmasse zu erwärmen, und wenigstens eine Werkzeuggreifvorrichtung (14), die ausgebildet ist, wenigstens ein Formgebungswerkzeug (22) zu greifen und/oder zu verriegeln und dieses der Spritzgussvorrichtung (12) und/oder der Heizvorrichtung (16) zu zuführen und/oder zu entnehmen.

2. Fertigungssystem (100) zur Herstellung von Formteilen aus Formmassen, insbesondere spritzfähigen oder schäumfähigen Formmassen, aufweisend wenigstens eine Verarbeitungsvorrichtung (102), die ausgebildet ist, ein Formgebungswerkzeug (22) mit einer Formmasse zu befüllen, wenigstens eine Prozessreaktionsvorrichtung (104), die ausgebildet ist, die in das Formgebungswerkzeug (22) eingefüllte Formmasse zu erwärmen oder zu kühlen, und wenigstens eine Werkzeugtransportvorrichtung (106), die ausgebildet ist, wenigstens ein Formgebungswerkzeug (22) zu greifen und zu verriegeln, oder die ausgebildet ist, wenigstens zwei Formgebungswerkzeuge (22) zu greifen und/oder zu verriegeln.

3. Spritzgusssystem (10) nach Anspruch 1, **dadurch gekennzeichnet, dass** die Werkzeuggreifvorrichtung (14) einen Doppelgreifer (24) zum Greifen von Formgebungswerkzeugen (22) und einen Handlingroboter (26) zum Bewegen des Doppelgreifers (24) aufweist, wobei der Doppelgreifer (24) mit dem Handlingroboter (26) gekoppelt ist.

4. Spritzgusssystem (10) oder Fertigungssystem nach Anspruch 2, **dadurch gekennzeichnet, dass** die Werkzeugtransportvorrichtung (106) einen Doppelgreifer (24) aufweist, der ausgebildet ist, zwei Formgebungswerkzeuge (22) zu greifen und/oder zu verriegeln oder dass die Werkzeugtransportvorrichtung (106) einen Mehrfachgreifer aufweist, der ausgebildet ist, wenigstens drei Formgebungswerkzeuge (22) zu greifen und/oder zu verriegeln.

5. Spritzgusssystem (10) oder Fertigungssystem nach Anspruch 3 oder 4, **dadurch gekennzeichnet, dass** der Doppelgreifer (24) eine erste Greifeinrichtung (34) und eine zweite Greifeinrichtung (38) aufweist, wobei die erste Greifeinrichtung (34) ausgebildet ist, ein Formgebungswerkzeug (22) zu greifen und/oder zu verriegeln, und wobei die zweite Greifeinrichtung (38) ausgebildet ist, ein Formgebungswerkzeug (22) zu greifen und/oder zu verriegeln.

6. Spritzgusssystem (10) oder Fertigungssystem nach Anspruch 5, **dadurch gekennzeichnet, dass** die erste Greifeinrichtung (34) zwei erste Greifbacken (40) aufweist, wobei jede erste Greifbacke (40) eine Klemmschiene (46) oder zwei zueinander beabstandete Klemmschienen (46) aufweist, wobei vorzugsweise die zweite Greifeinrichtung (38) zwei zweite Greifbacken (49) aufweist, wobei jede zweite Greifbacke (49) eine Klemmschiene (46) oder zwei zueinander beabstandete Klemmschienen (46) aufweist.

7. Spritzgusssystem (10) oder Fertigungssystem (100) nach Anspruch 2, **dadurch gekennzeichnet, dass** die Werkzeugtransportvorrichtung (106) einen Greifer (112) aufweist, der ausgebildet ist, ein Formgebungswerkzeug (22) zu greifen und/oder zu verriegeln, wobei vorzugsweise der Greifer (112) zwei Greifbacken (40, 49) aufweist, wobei jede Greifbacke (40, 49) eine Klemmschiene (46) oder zwei zueinander beabstandete Klemmschienen (46) aufweist.

8. Spritzgusssystem (10) oder Fertigungssystem (100) Anspruch 6 oder 7, **dadurch gekennzeichnet, dass** zum Greifen und/oder Verriegeln des Formgebungswerkzeuges (22) die Klemmschienen (46) mit Klemmleisten (54) des Formgebungswerkzeuges (22) unter Selbsthemmung zusammenwirken.

9. Spritzgusssystem (10) oder Fertigungssystem (100) nach einem der Ansprüche 2 und 4 bis 8, **dadurch gekennzeichnet, dass** die Werkzeugtransportvorrichtung (106) eine Manipulationsvorrichtung (111) aufweist, die mit dem Doppelgreifer (24), dem Mehrfachgreifer oder dem Greifer (112) gekoppelt ist, um den Doppelgreifer (24), den Mehrfachgreifer oder den Greifer (112) zu bewegen, wobei vorzugsweise die Manipulationsvorrichtung (111) ein Handlingroboter (26) oder eine Linearsystem (116) ist.

10. Spritzgusssystem (10) oder Fertigungssystem (100) nach einem der Ansprüche 3 bis 9, **dadurch gekennzeichnet, dass** der Doppelgreifer (24) eine Basisplatte (28) mit einem Kupplungselement (30) zur Verbindung des Doppelgreifers (24) mit dem Handlingroboter (26) oder der Manipulationsvorrichtung (111) aufweist, wobei an einem ersten Ende (32) der Basisplatte (28) die erste Greifeinrichtung (34) angeordnet ist und an einem zweiten Ende (36) der Basisplatte (28) die zweite Greifeinrichtung (38) angeordnet ist.

11. Spritzgusssystem (10) oder Fertigungssystem (100) nach einem der vorhergehenden Ansprüche, **gekennzeichnet durch** wenigstens eine Entform- und Belegstation (18), die ausgebildet ist, ein Formgebungswerkzeug (22) zu öffnen und/oder zu schließen, ein erhärtetes Formteil zu entformen und/oder ein Einlegeteil in ein Formgebungswerkzeug (22) einzulegen, wobei vorzugsweise die Werkzeuggreifvorrichtung (14) ausgebildet ist, wenigstens ein Formgebungswerkzeug (22) der Entform- und Belegstation (18) zuzuführen und/oder zu entnehmen.

12. Spritzgusssystem (10) oder Fertigungssystem (100) nach einem der vorhergehenden Ansprüche, **dadurch gekennzeichnet, dass** diejenige Vorrichtung und/oder Station vervielfacht ist, die während der Herstellung der Formteile die längste Zykluszeit aufweist.

13. Fertigungssystem (100) nach einem der Ansprüche 2 und 4 bis 12, **dadurch gekennzeichnet, dass** die Verarbeitungsvorrichtung (102) eine Spritzgussvorrichtung (12) oder eine Schäumvorrichtung (108) ist, wobei vorzugsweise die Schäumvorrichtung (108) eine Vakuumeinrichtung zum Evakuieren der Umgebung des Formgebungswerkzeuges (22) aufweist, wobei vorzugsweise die Prozessreaktionsvorrichtung (104) eine Heizvorrichtung (16) und/oder eine Kühlvorrichtung (110) ist.

14. Verfahren zur Herstellung von Formteilen aus spritzfähigen oder aus schäumfähigen Formmassen mittels eines Spritzgusssystems (10) nach einem der Ansprüche 1 und 3 bis 12 oder eines Fertigungssystems (100) nach einem der Ansprüche 2 und 4 bis 13, das folgende Schritte umfasst:
a. Bestücken der Spritzgussvorrichtung (12) oder der Verarbeitungsvorrichtung (102) mit einem Formgebungswerkzeug (22) mittels der Werkzeuggreifvorrichtung (14) oder der Werkzeugtransportvorrichtung (106);
b. Einspritzen einer spritzfähigen Formmasse in das Formgebungswerkzeug (22);
c. Verriegeln und Entnahme des Formgebungswerkzeugs (22) und Zuführen des Formgebungswerkzeugs (22) der Heizvorrichtung (16) oder der Prozessreaktionsvorrichtung (104) mittels der Werkzeuggreifvorrichtung (14) oder der Werkzeugtransportvorrichtung (106);
d. Erwärmen der Formmasse in der Heizvorrichtung (16) oder in der Prozessreaktionsvorrichtung (104) oder Kühlen der Formmasse in der Prozessreaktionsvorrichtung (104);
e. Entnahme des Formgebungswerkzeugs (22) und Zuführen des Formgebungswerkzeugs (22) der Entform- und Belegstation (18) mittels der Werkzeuggreifvorrichtung (14) oder der Werkzeugtransportvorrichtung (106);
f. Öffnen des Formgebungswerkzeugs (22), Entnahme des erhärteten Formteils und Schließen des Formgebungswerkzeugs (22) innerhalb der Entform- und Belegstation (18);
g. Entnahme des Formgebungswerkzeuges (22) und Zuführen des Formgebungswerkzeuges (22) der Spritzgussvorrichtung (12) oder der Verarbeitungsvorrichtung (102) mittels der Werkzeuggreifvorrichtung (14) oder der Werkzeugtransportvorrichtung (106).

15. Verfahren zur Herstellung von Formteilen aus Formmassen, insbesondere aus spritzfähigen oder aus schäumfähigen Formmassen, mittels eines Fertigungssystems (100) nach einem der Ansprüche 2 und 4 bis 13, das folgende Schritte umfasst:
a. Bestücken der Verarbeitungsvorrichtung (102) mit einem Formgebungswerkzeug (22) mittels der Werkzeugtransportvorrichtung (106);
b. Befüllen des Formgebungswerkzeugs (22) mit einer Formmasse innerhalb der Verarbeitungsvorrichtung (102) und Greifen eines leeren Formgebungswerkzeuges (22) mittels der Werkzeugtransportvorrichtung (106);
c. Entnahme des mit der Formmasse befüllten Formgebungswerkzeugs (22) aus der Verarbeitungsvorrichtung (102) mittels der Werkzeugtransportvorrichtung (106);
d. Zuführen des von der Werkzeugtransportvorrichtung (106) gehaltenem, leeren Formgebungswerkzeugs (22) der Verarbeitungsvorrichtung (102) mittels der Werkzeugtransportvorrichtung (106);
e. Zuführen des mit der Formmasse befüllten Formgebungswerkzeugs (22) der Prozessreaktionsvorrichtung (104) mittels der Werkzeugtransportvorrichtung (106);
f. Erwärmen oder Kühlen der Formmasse in der Prozessreaktionsvorrichtung (104);
g. Entnahme des Formgebungswerkzeugs (22) aus der Prozessreaktionsvorrichtung (104) mittels der Werkzeugtransportvorrichtung (106);
h. Zuführen des Formgebungswerkzeugs (22) der Entform- und Belegstation (18) mittels der Werkzeugtransportvorrichtung (106);
i. Öffnen des Formgebungswerkzeugs (22), Entnahme des erhärteten Formteils und Schließen des Formgebungswerkzeugs (22) innerhalb der Entform- und Belegstation (18).
